# EUROPEAN PATENT APPLICATION

(11) **EP 3 866 357 A1**
(43) Date of publication of application: **18.08.2021**
(21) Application number: 19870646.7
(22) Date of filing: 25.07.2019
(51) Int. Cl.: H04H 60/33, H04H 60/46, H04N 21/438, H04N 21/45

(54) **APPARATUS AND METHOD FOR CALCULATING VIEWER RATING BY USING CHANNEL CHANGE DATA**

(30) Priority: 11.10.2018 KR 20180120958
(71) Applicant: Zapple Inc., Seoul 06099 (KR)
(72) Inventor: KIM, Jong Soo, Seoul 06007 (KR); KU, Dong Hyun, Seoul 02638 (KR); JUNG, Jong Kyu, Seongnam-si Gyeonggi-do 13460 (KR); HWANG, Jae Woong, Seoul 05649 (KR)
(74) Representative: Vossius & Partner Patentanwälte Rechtsanwälte mbB
(86) International application number: PCT/KR2019/009216
(87) International publication number: WO 2020/075959

(57) **Abstract**

The present invention relates to an apparatus and a method for calculating a viewer rating and, more specifically, to an apparatus and a method for calculating a viewer rating, which process channel change data of a set-top box and can survey a viewer rating per household in real time. To this end, a viewer rating calculation apparatus, according to the present invention, which is a viewer rating calculation apparatus of a video management server connected to set-top boxes installed in respective households through a network, comprises: a receiving unit for receiving channel change data from the set-top boxes; a viewing history data processing unit for generating viewing history data for each set-top box by processing the channel change data, and processing the viewing history data for each set-top box so as to generate viewing history data for each channel; and a viewer rating calculation unit for determining the number of all set-top boxes by calculating the number of set-top boxes as one when two or more set-top boxes belong to one household, and then calculating viewer ratings in a specific time slot by using the viewing history data for each channel and the number of all set-top boxes.

## Description

### BACKGROUND

### 1. FIELD

The present invention relates to a viewer rating calculation apparatus and method, and more particularly, to a viewer rating calculation apparatus and method capable of surveying a viewer rating per household in real time by processing channel change data of a set-top box.

### 2. DESCRIPTION OF RELATED ART

A conventional general method for surveying a viewer rating of a television broadcast includes a diary type survey, an interview survey, a survey method using a meter, and the like. The diary type survey is to distribute printed small books to viewers so as to create their media exposure records, and has an advantage of being the cheapest compared to other survey methods, but has a limitation in that it relies on memory. For example, when a channel number is misremembered or a program and a channel are misunderstood, the reliability of a viewer rating survey is undermined. In addition, there is a short-coming in that a relatively large amount of time is required to collect and process data.

The interview survey is to survey a viewer rating through visits or phone interviews. There is an advantage in that it is possible to collect more reliable data compared to a self-reported diary type survey. However, the interview survey method also has limitations of being originated from human memory, an interviewee's non-cooperation, and a more survey cost.

The survey using a meter is to survey a viewer rating by using an electronic apparatus having a viewer rating survey function, the electronic apparatus called a peoplemeter. The meter survey method is to survey a viewer rating by attaching the peoplemeter to a TV receiver of a household selected as a panel, automatically checking viewing records of members of the panel household by means of the peoplemeter, and transmitting the viewing records to a viewer rating survey agent. However, in the survey method using a meter, there are also short-comings in that the installation of the meter is complicated and expensive, and the absolute cooperation of a viewer is required.

With the recent development of broadcasting technology, cable TV and IPTV broadcasts have been actively provided in addition to a traditional terrestrial broadcast or satellite broadcast. In particular, internet protocol television (IPTV) is a broadcasting field that is expected to grow explosively as it provides multimedia services such as television, video, audio, document, graphic and data services through IP networks with guaranteed quality, security and reliability.

In general, IPTV, a satellite broadcast, or a cable broadcast receives a broadcast by using a set-top box (STB) installed at each user's side. However, in recent years, rather than an independent set-top box, an integrated set-top box for integrating and viewing various types of broadcasts has also appeared.

In such a set-top box-based TV viewing environment, a method for surveying a viewer rating by using a set-top box is being developed.

However, a generally used viewer rating is a viewer rating per household. As the spread of the set-top box increases, two or more set-top boxes are installed in one household in many cases, and thus the viewer rating using the set-top box fails to reflect the viewer rating per household.

In addition, when a user presses a remote controller to change a channel, channel change information is received by a set-top box, and the channel change information is used as viewer rating survey data. When transmission of the channel change information is missing due to an error in the set-top box, distortion occurs in the viewer rating survey.

### SUMMARY

In order to solve the above problems, and an aspect of the present invention is to calculate a viewer rating per household that is generally used in a set-top box-based TV viewing environment.

Another aspect of the present invention is to calculate a reliable viewer rating by preventing distortion of a viewer rating due to missing transmission of channel change information occurring in a set-top box-based TV viewing environment.

To this end, a viewer rating calculation apparatus according to the present invention, the viewer rating calculation apparatus of a video management server connected to set-top boxes installed in respective households via a network includes a receiver configured to receive channel change data from the set-top boxes, a viewing history data processor configured to generate viewing history data for each set-top box by processing the channel change data and generate viewing history data for each channel by processing the generated viewing history data for each set-top box, and a viewer rating calculator configured to determine the total number of set-top boxes by calculating the number of set-top boxes as one when two or more set-top boxes belong to one household, and then calculate a viewer rating in a specific time slot by using the viewing history data for each channel and the total number of set-top boxes.

In addition, a viewer rating calculation method according to the present invention, the viewer rating calculation method of a video management server connected to set-top boxes installed in respective households via a network, includes receiving channel change data from the set-top boxes, generating viewing history data for each set-top box by processing the channel change data, generating viewing history data for each channel by processing the viewing history data for each set-top box, determining the total number of set-top boxes by calculating the number of set-top boxes as one when two or more set-top boxes belong to one household, and calculating a viewer rating of a specific channel by using the viewing history data for each channel and the total number of set-top boxes.

Here, the channel change data includes a set-top box ID, a channel before change (start channel), a changed channel (arrival channel), a change start time, a change completion time, a set-top box IP address, and service area information and platform operator information of a set-top box.

The viewing history data for each set-top box includes a viewing start time and a viewing completion time for each set-top box, and the viewing history data for each channel includes a viewing start time and a viewing completion time for each set-top box.

The calculating the viewer rating of the specific channel includes calculating the number of set-top boxes as one when being viewed by two or more set-top boxes belonging to one household in a specific time slot in which a viewer rating is calculated.

In addition, the calculated viewer rating of the specific channel and a past viewer rating of the specific channel are compared to each other, and when there is a difference greater than or equal to a threshold between the calculated viewer rating of the specific channel and the past viewer rating of the specific channel, whether there is a date-based event is confirmed. When there is no date-based specific event, the calculated viewer rating of the specific channel is corrected,

In addition, when the set-top boxes are respectively subscribed to multiple platform operators, with respect to the specific channel, a first viewer rating calculated from set-top boxes subscribed to a first platform operator is compared to a second viewer rating calculated from set-top boxes subscribed to a second platform operator, and when there is a difference greater than or equal to a threshold between the first viewer rating and the second viewer rating, the calculated viewer rating of the specific channel is corrected.

The correcting of the calculated viewer rating of the specific channel includes requesting re-transmission of channel change data of a time section in which there is the difference greater than or equal to the threshold.

As described above, the viewer rating calculation method according to the present invention may determine a household to which each set-top box belongs, thereby calculating a viewer rating per household that is generally used in a set-top box-based TV viewing environment.

In addition, the present invention has an effect of preventing distortion of a viewer rating and providing a reliable viewer rating by confirming missing transmission of channel change data occurring in a set-top box-based TV viewing environment through a verification procedure for the calculated viewer rating, and correcting the viewer rating.

In addition, according to the present invention, direct intervention (such as survey) of a viewer is not required, and thus corresponding data may be collected without interfering with the viewer's viewing to calculate a viewer rating.

### BRIEF DESCRIPTION OF THE DRAWINGS

FIG. 1 is a schematic configuration diagram of a system for calculating a viewer rating according to the present invention.
FIG. 2 is an internal configuration diagram of a viewer rating calculation apparatus according to the present invention.
FIG. 3 is a diagram illustrating channel change data.
FIG. 4 is a diagram illustrating viewing history information for each set-top box.
FIG. 5 is a diagram illustrating viewing history information for each channel.
FIG. 6 is a diagram illustrating viewing history information for each channel when there are two or more set-top boxes in a household.
FIG. 7 is a flowchart illustrating a processing procedure for calculating a viewer rating according to the present invention.
FIG. 8 is a graph illustrating a comparison between a viewer rating and a past viewer rating of a specific channel.
FIG. 9 is a graph illustrating a comparison between viewer ratings of the same channel for set-top boxes subscribed to different platform operators.

### DETAILED DESCRIPTION

Hereinafter, preferred embodiments of the present invention will be described in detail with reference to the accompanying drawings so as to clarify the technical idea of the present invention. In the description of the present invention, detailed description of well-known related structures or functions will be omitted when it is deemed that the gist of the present invention is unnecessarily obscured. Components having substantially the same functional configuration among drawings will be designated by the same reference numerals and symbols, wherever possible, even though illustrated in different drawings. For ease of description, an apparatus and method are described together, if necessary.

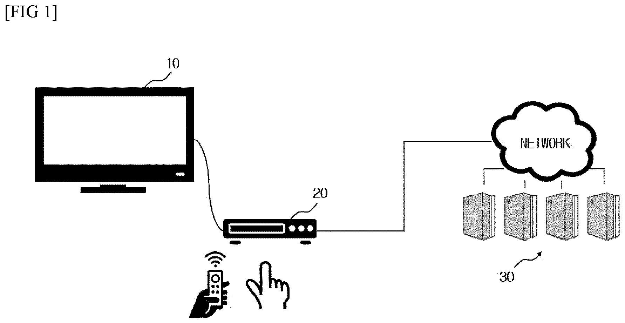

FIG. 1 illustrates a schematic configuration of a system for calculating a viewer rating according to the present invention.

Referring to FIG. 1, a system for calculating a viewer rating according to the present invention includes a TV apparatus 10, a set-top box 20 connected to the TV apparatus 10, and a server 30 that communicates with the set-top box 20 via a network.

Each household has the TV apparatus 10, and the set-top box 20 connected to and installed in the TV apparatus 10. The set-top box 20 is connected to a server 30 via a communication network such as the Internet, and communicates with the server 30. Depending on the embodiment, the set-top box 20 may transmit, to the server 30, information on change of a channel of the TV apparatus 10. In addition, depending on the embodiment, the set-top box 20 may receive a content including broadcast data to be provided to the TV apparatus 10, from the server 30.

The server 30, which is a distributed processing system that stores and manages mass data, may communicate with set-top box 20 to process various data. For example, the server 30 may manage data provided to the set-top box 20, such as advertisement data, broadcast data, and the like, and in the present invention, the server 30 may receive channel change data received from the set-top box 20 to calculate a viewer rating. In the specification, an apparatus that is included in the server 30 to calculate a viewer rating is described as a viewer rating calculation apparatus. However, in the server 30, multiple physically separated apparatuses may perform different functions. Hereinafter, the server 30 and the viewer rating calculation apparatus are considered to be the same for ease of description.

A viewer of a household may change a TV channel by using a remote controller while viewing a TV. The viewer of the household is referred to as a user in the following description.

When the user presses a channel shift button of the remote controller or presses a specific channel number while viewing TV, a channel change signal is transmitted from the remote controller to the set-top box 20.

The set-top box 20 may generate channel change data based on the channel change signal of the remote controller, and may transmit the generated data to the viewer rating calculation apparatus 30 via a network. In the present invention, the set-top box 20 may request broadcast data for a channel after change via a network based on the channel change signal received from the remote controller, and may generate channel change data including time information for transmitting the changed channel data to the actual TV apparatus 10 in response to reception of the broadcast data via the network again.

Depending on the embodiment, the set-top box 20 may transmit the generated channel change data directly to the viewer rating calculation apparatus 30, or may transmit the channel change data by the request of the viewer rating calculation apparatus 30. In addition, in another embodiment, the set-top box 20 may transmit the channel change data to the viewer rating calculation apparatus 30 according to a preset time interval.

The viewer rating calculation apparatus 30 may collect channel change data from the set-top box 20 installed in each household, and then may process the channel change data to calculate a viewer rating per household in real time.

As a spread rate of the set-top box 20 increases, two or more set-top boxes may be installed in one household, and the viewer rating calculation apparatus 30 according to the present invention may determine a plurality of set-top boxes belonging to one household by confirming an IP address of a set-top box, and may process that there is one set-top box per household, thereby calculating the viewer rating per household that is used in general.

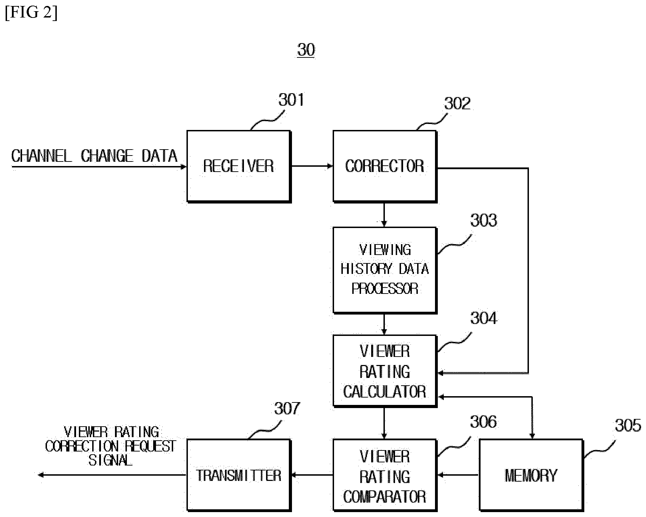

FIG. 2 is a block diagram of a viewer rating calculation apparatus according to an embodiment of the present invention.

Referring to FIG. 2, the viewer rating calculation apparatus 30 may include a receiver 301, a corrector 302, a viewing history data processor 303, a viewer rating calculator 304, a memory 305, a viewer rating comparator 306, and a transmitter 307.

The receiver 301 receives channel change data from the set-top box 20 via a network such as the Internet and the like.

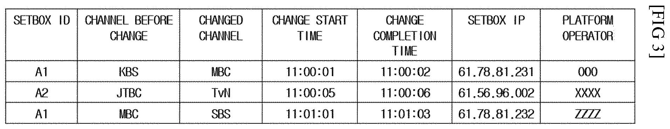

The channel change data may include a set-top box ID, a channel before change (start channel), a changed channel (arrival channel), a change start time, a change completion time, a set-top box IP address, and service area information and platform operator information of a set-top box, as illustrated in FIG. 3. Depending on the embodiment, the service area information and the platform operator information of the set-top box may be included in the set-top box ID, and the channel change data may have different formats depending on a platform operator or service area that provides the set-top box.

The corrector 302 may check an error in the channel change data transmitted via the network, and may correct the channel change data when the error occurs. For example, the corrector 302 may correct the channel change data when the channel change data is not received even though the channel change data that does not conform to a predetermined format of the channel change data is received or the channel change data needs to be received within a preset time by request, or when the channel change data does not fluctuate for a predetermined time or longer. The correction of the channel change data may be performed by the corrector 302 on its own or in a manner of requesting the channel change data from the set-top box 20 again.

The viewing history data processor 303 processes the channel change data to generate viewing history data for each set-top box, and processes the viewing history data for each set-top box to generate viewing history data for each channel.

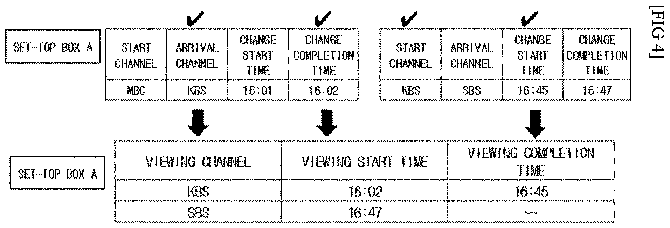

FIG. 4 illustrates one embodiment of viewing history data for each set-top box.

Referring to FIG. 4, it is illustrated that information of channel change data is used to generate viewing history data for each set-top box. That is, in the same set-top box, when an arrival channel and a start channel are common in channel change data generated in time series, a viewing start time and a viewing completion time for the common channel may be determined based on a change completion time of the channel change data including the arrival channel and a change start time of the channel change data including the start channel.

As described above, the viewing history data for each set-top box includes a viewing start time and a viewing completion time for each channel.

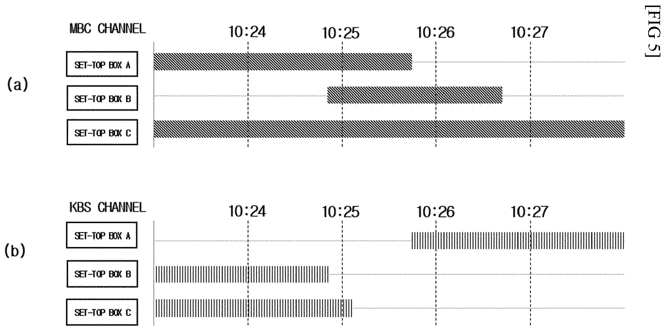

FIG. 5 illustrates one embodiment of viewing history data for each channel.

Referring to FIG. 5, from the viewing history data for each set-top box, a viewing start time and a viewing completion time for a specific channel may be extracted to generate viewing history data for each channel.

As described above, the viewing history data for each channel includes a viewing start time and a viewing completion time for each set-top box.

FIG. 5A illustrates viewing history data of an MBC channel, and FIG. 5B illustrates viewing history data of a KBS channel. As illustrates in FIGS. 5A and 5B, with respect to each channel, it is possible to identify a time section in which a corresponding channel has been viewed by set-top boxes A, B, and C during an entire time section.

Referring back to FIG. 2, a viewer rating calculator 304 calculates a viewer rating of a specific channel by using viewing history data for each channel and the total number of set-top boxes.

The viewer rating calculator 304 calculates the number of two or more set-top boxes belonging to one household as one to determine the total number of set-top boxes. The viewer rating calculator 304 may check a set-top box IP address included in channel change data to determine a household to which a set-top box belongs. For example, when there are three set-top boxes with different set-top box IDs but the same IP address (61.78.81.23x) in the channel change data, the three set-top boxes are considered as belonging to one household to count the number of set-top boxes as one.

The viewer rating calculator 304 may check the number of set-top boxes viewing a channel in a specific time slot from viewing history data for each channel, and may calculate a viewer rating in the specific time slot by dividing the number of set-top boxes viewing the channel by the total number of set-top boxes. In this case, when being viewed by two or more set-top boxes belonging to one household in the specific time slot, the viewer rating is calculated by calculating the number of set-top boxes as one.

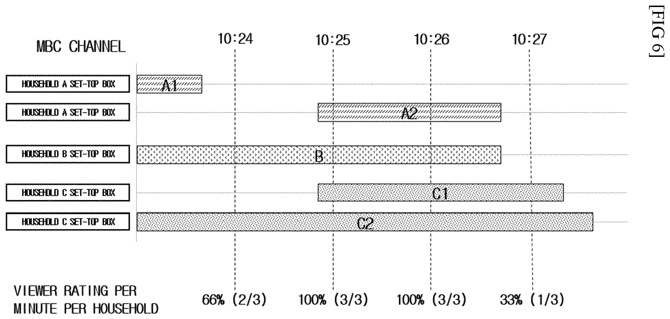

FIG. 6 illustrates one embodiment of viewing history data for each channel when there are two or more set-top boxes in a household.

Referring to FIG. 6, it can be seen that there are two set-top boxes A1 and A2 in a household A, one set-top box B in a household B, and two set-top boxes C1 and C2 in a household C.

In this situation, the total number of set-top boxes is three to be equal to the number of households, and is used to calculate a viewer rating. Referring to a viewer rating in a specific time slot, the viewer rating of the MBC channel at 10:24 is 2/3=60%, and the viewer rating of the MBC channel at 10:27 is 1/3=33%. When being viewed by both two set-top boxes belonging to the household C at 10:25 and 10:26, the number of set-top boxes is calculated as one, and accordingly the viewer rating is 3/3=100%.

The viewer rating calculator 304 may calculate a viewer rating of a specific household as well as a viewer rating of an entire household by using the total number of set-top boxes. That is, the viewer rating calculator 304 may calculate a viewer rating of a specific area or a viewer rating of a household subscribed to a specific platform operator by using service area information or platform operator information included in channel change data.

For example, with respect to a specific channel, the viewer rating calculator 304 may calculate a first viewer rating from set-top boxes subscribed to a first platform operator and a second viewer rating from set-top boxes subscribed to a second platform operator. As described above, the viewer rating calculator 304 may calculate a viewer rating in various manners.

The memory 305 stores various viewer ratings calculated by the viewer rating calculator 304.m The memory 305 may store a viewer rating of an entire household, a viewer rating of a specific area, a household viewer rating for each platform operator, and the like by dates.

The viewer rating comparator 306 compares a viewer rating calculated by the viewer rating calculator 304 and a past viewer rating stored in the memory 305. For example, the viewer rating comparator 306 may compare a viewer rating of a specific channel to a week ago viewer rating of the specific channel that is a past viewer rating. That is, since TV programs are organized by days of the week and a trend is shown accordingly, viewer rating data of the same day of a corresponding time slot may be compared. In addition, a comparison of viewer ratings may be performed by comparing viewer ratings of a corresponding channel, and past viewer ratings or viewer ratings at the same time point of a similar channel group including another channel showing a similar viewer rating trend.

As a result of the comparison, when there is a difference greater than or equal to a threshold between two viewer ratings, the viewer rating comparator 306 determines whether the difference is due to a date-based event (festival, holiday, national disaster, or the like), and generates a viewer rating correction request signal when the difference is not due to the date-based event.

Depending on the embodiment, when there is a difference greater than or equal to a threshold between the two viewer ratings, the viewer rating comparator 306 may determine a parameter of all channel change data.

For example, when only 10,000 pieces of channel change data are received at a corresponding time point even though total 100,000 pieces of channel change data need to be received, a problem may have occurred in a network situation or a platform service itself, and accordingly the parameter of all channel change data may be determined to generate a viewer rating correction request signal.

In addition, the viewer rating comparator 306 may compare viewer ratings between set-top boxes subscribed to different platform operators, as described above. That is, the viewer rating comparator 306 may compare the first viewer rating calculated from the set-top boxes subscribed to the first platform operator and the second viewer rating calculated from the set-top boxes subscribed to the second platform operator, with respect to a specific channel.

As a result of the comparison, when there is a difference greater than or equal to a threshold between the first viewer rating and the second viewer rating, the viewer rating comparator 306 generates the above-described viewer rating correction request signal.

The viewer rating correction request signal, which is for re-requesting channel change data from the set-top box 20, may request re-transmission of channel change data of a time section in which a difference greater than or equal to a threshold occurs or re-transmission of channel change data of an entire time section (day), through the viewer rating correction request signal

The transmitter 307 receives the viewer rating correction request signal from the viewer rating comparator 306, and transmits the viewer rating correction request signal to the set-top box 20 via a network.

Depending on the embodiment, the viewer rating comparator 306 may transmit the viewer rating correction request signal to the viewer rating calculator 304. The viewer rating calculator 304 may correct a viewer rating calculation value so as to show a similar viewer rating trend with respect to a viewer rating showing a difference greater than or equal to a threshold. The correction of the viewer rating calculation value may be performed in various manners. For example, when a past record is checked, and data of one platform shows a difference greater than or equal to a threshold (threshold: 50%) per hour with respect to a viewing pattern in the same time slot of the same channel, a request for re-transmission of channel change data is performed with respect to the set-top box 20.

Depending on the embodiment, the set-top box 20 that requests re-transmission of the channel change data may be selected in various manners.

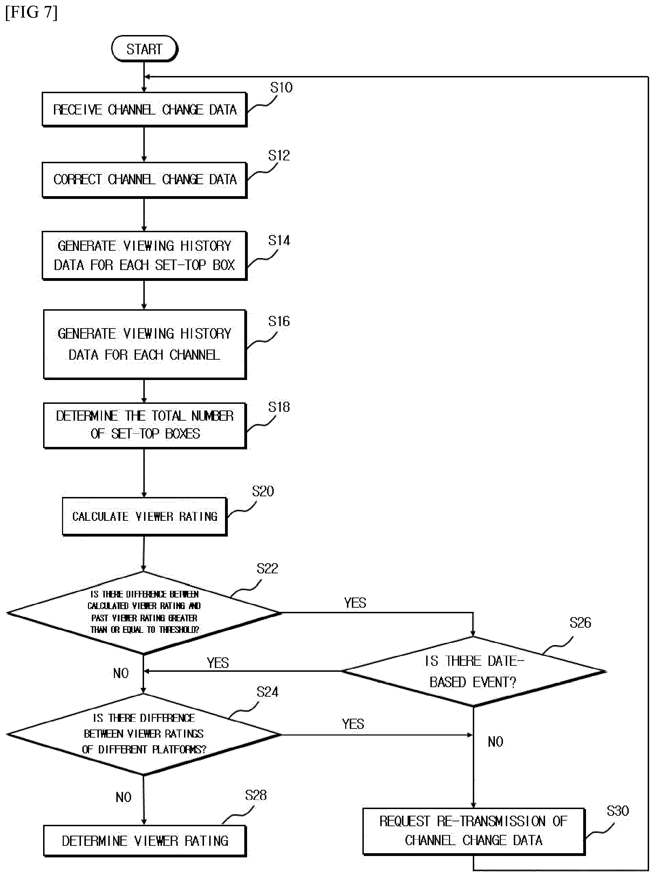

FIG. 7 is a flowchart illustrating a viewer rating calculation method according to an embodiment of the present invention.

A processing procedure for calculating a viewer rating is performed by a viewer rating calculation apparatus of a video management server.

Referring to FIG. 7, first, the receiver 301 of the viewer rating calculation apparatus 30 receives channel change data from the set-top box 20 in step S10.

Next, the corrector 302 checks whether there is an error in the channel change data through an error detection and correction circuit or the like, and the corrector 302 performs correction on the channel change data when the error is detected in step S12. As described above, whether there is an error in the channel change data may be verified in various manners.

When the correction of the channel change data is completed, the viewing history data processor 303 processes the channel change data to generate viewing history data for each set-top box in step S14. Subsequently, the viewing history data for each set-top box is processed to generate viewing history data for each channel in step S 16.

The viewer rating calculator 304 checks a set-top box IP address of the channel change data, calculates the number of the set-top boxes as one when there are two or more set-top boxes belonging to one household, and determines the total number of set-up boxes in step S18.

When the total number of set-top boxes is determined, a viewer rating is calculated by using viewing history data for each channel and the total number of set-top boxes in step S20. The viewer rating includes not only an overall viewer rating using the total number of set-top boxes, but also a specific viewer rating using the number of set-top boxes belonging to a specific area or platform operator.

When various viewer ratings are calculated in this manner, the viewer rating comparator 306 first compares a viewer rating of a specific channel to a past viewer rating of the specific channel, and checks whether there is a difference greater than or equal to a threshold between the viewer rating of the specific channel and the past viewer rating of the specific channel in step S22.

When there is no difference greater than or equal to the threshold, with respect to the specific channel, a first viewer rating calculated from set-top boxes subscribed to a first platform operator is compared to a second viewer rating calculated from set-top boxes subscribed to a second platform operator, and whether there is a difference greater than or equal to a threshold between the two viewer ratings is checked in step S24.

When there is no difference greater than or equal to the threshold, it is determined in step S20 that there is no abnormality in the calculated viewer rating, and the calculated viewer rating is determined in step S28.

However, when it is checked in step S22 that there is a difference greater than or equal to the threshold, it is checked once again that there is a specific date-based event in step S26, and when there is the specific date-based event, the procedure goes to step S24, and when there is no specific date-based event, it determines that there is an abnormality in the viewer rating, and the set-top box 20 is requested to re-transmit the channel change data in step S30.

In addition, when it is checked in step 24 that there is a difference greater than or equal to the threshold, it is determined that there is an abnormality in the viewer rating, and the set-top box 20 is requested to re-transmit the channel change data in step S30.

When the set-top box 20 is requested to re-transmit the channel change data, and the channel change data is re-received from the set-top box 20, the viewer rating is calculated again by repeating the above-described steps.

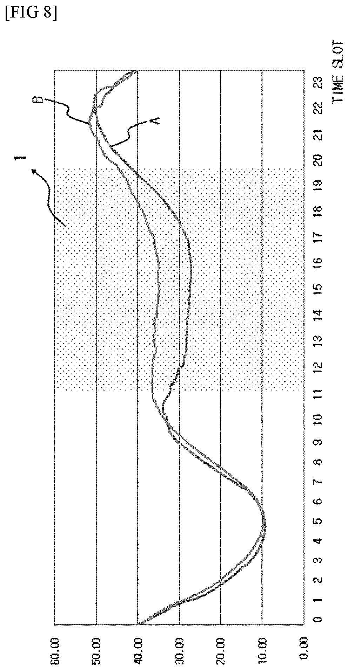

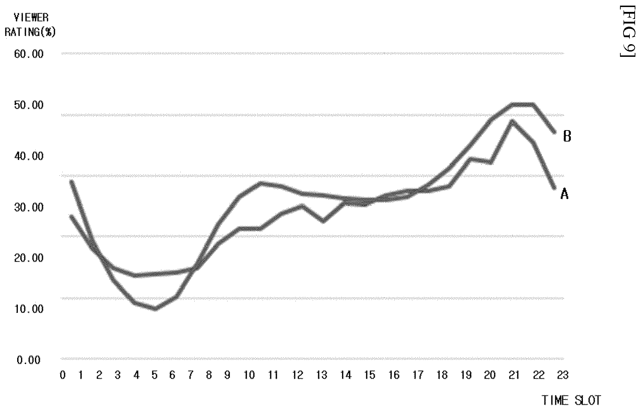

FIG. 8 is a graph illustrating a comparison between a viewer rating and a past viewer rating of a specific channel, and FIG. 9 is a graph illustrating a comparison between viewer ratings of the same channel for set-top boxes subscribed to different platform operators.

Referring to FIG. 8, graph A illustrates a viewer rating calculated on the day, and graph B illustrates a past viewer rating per week (for example, a week ago viewer rating).

Here, a portion indicated by reference numeral 1 shows a difference between the two viewer ratings, and when the difference is greater than or equal to a preset threshold, it may be determined that there is an abnormality in the viewer rating calculated on the day.

Referring to FIG. 9, line A represents a viewer rating of subscribers belonging to a first platform operator, and line B represents a viewer rating of subscribers belonging to a second platform operator.

In general, with respect to the same channel, viewer ratings of two platform operators show a substantially similar trend. FIG. 9 also illustrates a similar trend between two viewer ratings, and when a difference between the two viewer ratings in a specific section becomes greater than or equal to a preset threshold, it may be determined that there is an abnormality in a viewer rating calculated with respect to a specific channel.

The reason why a viewer rating deviates from a general trend is often due to national events or data loss.

In the present invention, when there is a large difference between viewer ratings even though there is no date-based event through a past viewer rating comparison process, or when there is a large difference between two viewer ratings through a viewer rating comparison process between different platforms, it is considered that there is data loss, that is, data loss when transmitting channel change data in a set-top box viewing environment. Accordingly, the viewer rating may be re-calculated through re-transmission of the channel change data, thereby enhancing reliability of the viewer rating.

The above-exemplary structures according to the present invention may be implemented in various manners, such as program instructions executed by a processor, a software module, a microcode, a computer program product recorded on a recording medium that is readable by a computer (including all devices having an information processing function), logic circuits, an application-specific integrated circuit, or firmware. Examples of the computer-readable recording medium may include ROM, RAM, CD, DVD, magnetic tapes, hard discs, floppy discs, optical data storage devices, and the like, and also include such a carrier-wave type implementation as transmission via the Internet. In addition, the computer-readable recording medium is distributed in a computer system connected via a network, so that a computer readable code is stored and executed in a distributed manner.

The present invention has been described with reference to the preferred embodiments illustrated in the drawings. It should be understood that embodiments described herein are merely exemplary, and should be considered in a descriptive sense, not a restrictive sense. The real technical protection scope should be defined by the technical spirit of the appended claims, not by the descriptions above. Although specific terms are used in the specification, they are used only for the purpose of describing the concept of the present invention, and are not used to restrict the meaning or limit the scope of the present invention as set forth in the claims. Therefore, those skilled in the art will appreciate that various modified forms and equivalent other embodiments are possible without departing from the fundamental spirit of the present invention. It should be understood that the equivalents include equivalents that is to be developed in the future, as well as presently known equivalents, i.e., all constitutional components invented to perform the same function regardless of a structure.

## Claims

1. A viewer rating calculation apparatus using channel change data, the viewer rating calculation apparatus of a server connected to set-top boxes installed in respective households via a network, comprising:
a receiver configured to receive channel change data from the set-top boxes;
a viewing history data processor configured to generate viewing history data for each set-top box by processing the channel change data and generate viewing history data for each channel by processing the generated viewing history data for each set-top box; and
a viewer rating calculator configured to determine the total number of set-top boxes by calculating the number of set-top boxes as one when a plurality of set-top boxes belong to one household, and then calculate a viewer rating in a specific time slot by using the viewing history data for each channel and the total number of set-top boxes.

2. The viewer rating calculation apparatus using channel change data of claim 1, wherein the channel change data comprises a set-top box ID, a channel before change (start channel), a changed channel (arrival channel), a change start time, a change completion time, and a set-top box IP address.

3. The viewer rating calculation apparatus using channel change data of claim 1, wherein the viewing history data for each set-top box comprises a viewing start time and a viewing completion time for each channel.

4. The viewer rating calculation apparatus using channel change data of claim 1, wherein the viewing history data for each channel comprises a viewing start time and a viewing completion time for each set-top box.

5. The viewer rating calculation apparatus using channel change data of claim 1, wherein the viewer rating calculator is configured to calculate the number of set-top boxes as one, when being viewed by a plurality of set-top boxes belonging to one household in a specific time slot in which a viewer rating is calculated.

6. The viewer rating calculation apparatus using channel change data of claim 1, further comprising:
a viewer rating comparator configured to compare the calculated viewer rating in the specific time slot and a past viewer rating of the specific channel.

7. The viewer rating calculation apparatus using channel change data of claim 6, wherein the viewer rating comparator is configured to:
determine, when there is a difference greater than or equal to a threshold between the calculated viewer rating of the specific channel and the past viewer rating of the specific channel, whether the difference is due to a date-based event; and
generate a viewer rating correction request signal, when the difference is not due to the date-based event.

8. The viewer rating calculation apparatus using channel change data of claim 6, wherein the viewer rating comparator is configured to:
calculate a first viewer rating from set-top boxes subscribed to a first platform operator and calculate a second viewer rating from set-top boxes subscribed to a second platform operator, with respect to the specific channel; and
compare the first viewer rating and the second viewer rating to each other.

9. The viewer rating calculation apparatus using channel change data of claim 8, wherein the viewer rating comparator is configured to generate a viewer rating correction request signal, when there is a difference greater than or equal to a threshold between the first viewer rating and the second viewer rating.

10. The viewer rating calculation apparatus using channel change data of claim 7, wherein the viewer rating correction request signal is a signal for requesting re-transmission of channel change data in a time section in which there is a difference greater than or equal to a threshold.

11. A viewer rating calculation method using channel change data, the viewer rating calculation method of a video management server connected to set-top boxes installed in respective households via a network, comprising:
receiving channel change data from the set-top boxes;
generating viewing history data for each set-top box by processing the channel change data;
generating viewing history data for each channel by processing the viewing history data for each set-top box;
determining the total number of set-top boxes by calculating the number of set-top boxes as one, when a plurality of set-top boxes belong to one household; and
calculating a viewer rating of a specific channel by using the viewing history data for each channel and the total number of set-top boxes.

12. The viewer rating calculation method using channel change data of claim 11, wherein the channel change data comprises a set-top box ID, a channel before change (start channel), a changed channel (arrival channel), a change start time, a change completion time, and a set-top box IP address.

13. The viewer rating calculation method using channel change data of claim 11, wherein the viewing history data for each set-top box comprises a viewing start time and a viewing completion time for each channel.

14. The viewer rating calculation method using channel change data of claim 11, wherein the viewing history data for each set-top box comprises a viewing start time and a viewing completion time for each set-top box.

15. The viewer rating calculation method using channel change data of claim 11, further comprising:
comparing between the calculated viewer rating of the specific channel and a past viewer rating of the specific channel to each other; and
checking whether there is a date-based event, when there is a difference greater than or equal to a threshold between the calculated viewer rating of the specific channel and the past viewer rating of the specific channel.

16. The viewer rating calculation method using channel change data of claim 15, further comprising:
correcting the calculated viewer rating of the specific channel, when there is no date-based specific event.

17. The viewer rating calculation method using channel change data of claim 16, wherein the correcting of the calculated viewer rating of the specific channel comprises re-requesting channel change data in a time section in which there is a difference greater than or equal to a threshold.

18. The viewer rating calculation method using channel change data of claim 11, further comprising:
comparing, with respect to the specific channel, a first viewer rating calculated from set-top boxes subscribed to a first platform operator and a second viewer rating calculated from set-top boxes subscribed to a second platform operator, when the set-top boxes are respectively subscribed to multiple platform operator; and
correcting the calculated viewer rating of the specific channel, when there is a difference greater than or equal to a threshold between the first viewer rating and the second viewer rating.

19. The viewer rating calculation method using channel change data of claim 18, wherein the correcting of the calculated viewer rating of the specific channel comprises re-requesting channel change data in a time section in which there is the difference greater than or equal to the threshold.
